# EUROPÄISCHE PATENTSCHRIFT

(11) **EP 1 846 274 B1**
(45) Veröffentlichungstag und Bekanntmachung des Hinweises auf die Patenterteilung: **26.05.2010**
(21) Anmeldenummer: 05817209.9
(22) Anmeldetag: 12.12.2005
(51) Int. Cl.: B60S 1/40

(54) **VORRICHTUNG ZUM GELENKIGEN VERBINDEN EINES WISCHBLATTS MIT EINEM WISCHARM EINES SCHEIBENWISCHERS**
DEVICE FOR THE PIVOTING CONNECTION OF A WIPER BLADE TO A WIPER ARM OF A WINDSCREEN WIPER
DISPOSITIF POUR RELIER DE FACON ARTICULEE UN BALAI D'ESSUIE-GLACE A UN BRAS D'ESSUIE-GLACE D'UN SYSTEME D'ESSUIE-GLACE

(30) Priorität: 03.02.2005 DE 102005005184; 08.04.2005 DE 102005016485
(43) Veröffentlichungstag der Anmeldung: 24.10.2007
(73) Patentinhaber: ROBERT BOSCH GMBH, 70442 Stuttgart (DE)
(72) Erfinder: KINNAERT, Erik, B-3700 Tienen (BE); BEELEN, Hans, B-3540 Herk de Stad (BE)
(86) Internationale Anmeldenummer: PCT/EP2005/056681
(87) Internationale Veröffentlichungsnummer: WO 2006/081893

(56) Entgegenhaltungen:
- WO-A-02/40328
- DE-A1- 10 320 930
- US-B1- 6 530 111

## Beschreibung

### Stand der Technik

Die Erfindung geht von einer Vorrichtung zum gelenkigen Verbinden eines Wischblatts mit einem Wischarm eines Scheiben wischers nach dem Oberbegriff des Anspruchs 1 aus.

Aus der WO 02/40328 A1 ist eine derartige Vorrichtung bekannt. Sie umfasst ein Anschlusselement in Form einer Blechkralle, einen Adapter aus Kunststoff und ein mit dem Wischarm fest verbundenes Verbindungselement. Das Anschlusselement ist an einem Tragelement des Wischblatts in Form zweier parallel verlaufender Federschienen mittels Krallen und/oder durch Schweißen befestigt. Es besitzt ein u-förmiges Querschnittprofil, wobei ausgehend von einem dem Tragelement benachbarten Bodenteil Seitenwände etwa um 90° von dem Tragelement weggebogen sind. In den Seitenwänden sind Öffnungen vorgesehen, in die ein Lagerbolzen drehfest eingesetzt ist. Auf diesem ist der Adapter, der zwischen den Seitenwänden des Anschlusselements seitlich geführt ist, mit einer Nabe schwenkbar gelagert. Der Adapter besitzt Rastmittel und Haltemittel, mit denen er in das zum Wischblatt hin offene Profil des Verbindungselements eingeklippst ist. In der montierten Stellung übergreift das Verbindungselement sowohl den Adapter als auch die Seitenwände des Anschlusselements von außen her. Bei einer Relativbewegung zwischen dem Wischarm und dem Wischblatt während eines Wischvorgangs kann es zwischen der Innenseite des Verbindungselements und der Außenseite des Anschlusselements zu Berührungen kommen. Da diese beiden Teile in der Regel aus Metall gefertigt sind, entsteht hierbei eine erhöhte Reibung, wodurch außerdem der Korrosionsschutz beschädigt werden kann.

Eine ähnliche Vorrichtung zum gelenkigen Verbinden eines Wischblatts mit einem Wischarm ist Gegenstand einer älteren Patentanmeldung DE 103 47 637.7. Hierbei besitzt das Anschlusselement in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist der Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in das zum Wischblatt hin offene Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei im Verbindungselement eingesetzt. Somit entkoppelt der Adapter aus Kunststoff das Verbindungselement vom Anschlusselement, wodurch eine gute Korrosionsbeständigkeit und geringe Reibungsverluste gewährleistet sind.

### Vorteile der Erfindung

Nach der Erfindung ist das Verbindungselement ein im Wesentlichen quaderförmiger Hohlkörper, der auf der dem Anschlusselement zugewandten Seite offen ist und an dem an einer Längsseite ein Befestigungselement angeformt ist. Dieses deckt die Längsseite des quaderförmigen Hohlkörpers ab und ist am Ende des Wischarms befestigt. Ferner sind zumindest die Stirnwände und eine Deckwand des quaderförmigen Hohlkörpers im Wesentlichen geschlossen. In den quaderförmigen Hohlkörper wird der Adapter eingesetzt, der eine passgenaue quaderförmige Außenkontur besitzt und das Anschlusselement von außen umgibt, sodass der Adapter im Verbindungselement praktisch spielfrei geführt ist und die vom Wischarm ausgeübten Kräfte wirksam auf das Wischblatt überträgt.

In einer bevorzugten Ausführungsform ist die Längsseite offen, die dem Befestigungselement gegenüberliegt. Hier ist zweckmäßigerweise zumindest ein Halteelement angeordnet, vorzugsweise aber zwei in Form von zwei Seitenwinkeln, die an den Stirnwänden des Verbindungselements angebracht sind, wobei die Seitenwinkel in der Ebene der offenen Längsseite liegen, sodass Rastelemente an einer zugeordneten Längsseite des Adapters an den Seitenwinkel verrasten können. Auf der gegenüberliegenden Längsseite liegt der Adapter an einem Haltewinkel an, der ihn gleichzeitig mit seinem abgewickelten Ende in Richtung des Wischblatts sichert. Der Haltewinkel kann dabei die untere Kante des Adapters umfassen oder in eine Aussparung des Adapters eingreifen.

Die offene Längsseite des Verbindungselements wird somit durch die zugeordnete Längswand des Adapters geschlossen. Die offene Längsseite des Verbindungselements ermöglicht es, die Rastelemente des Adapters bei der Demontage leicht zu betätigen. Außerdem ermöglicht die erfindungsgemäße Vorrichtung eine strömungsgünstige Anbindung des Wischarms an das Wischblatt, insbesondere im Bereich der oberen Deckwand und der vom Wischarm abgewandten Stirnwand des Verbindungselements. Diese Bereiche sind besonders kritisch bei der Abwärtsbewegung des Scheibenwischers, wenn durch die Anströmung die Gefahr besteht, dass Restwasser vom Scheibenwischer auf die bereits gereinigte Fahrzeugscheibe zurückgezogen wird. Durch die freie Gestaltungsmöglichkeit bei der erfindungsgemäßen Vorrichtung kann dem entgegengewirkt werden. So werden zweckmäßigerweise tote Winkel vermieden, in denen sich bei Regen Restwasser ansammeln kann. Ferner ist es zweckmäßig, auf der Deckwand des Verbindungselements ein Spoilerelement vorzusehen, das zum einen die Spoilerwirkung eines Wischblattspoilers unterstützt und zum anderen die Strömung in diesem Bereich von der Fahrzeugscheibe weg lenkt, sodass das von der Strömung mitgeführte Wasser nicht auf die Fahrzeugscheibe trifft.

Das Spoilerelement kann integraler Bestandteil der oberen Deckwand des Verbindungselements sein, es kann aber auch an einer Abdeckkappe angeformt sein, die aus optischen Gründen beispielsweise die offene Längsseite des Verbindungselements und damit die Rastelemente am Adapter abdeckt. Sie kann somit gleichzeitig Designfunktionen übernehmen. Die Abdeckkappe kann entweder am Verbindungselement oder am Adapter befestigt werden, z.B. indem sie an den Seitenwinkeln des Verbindungselements eingeklippst ist oder durch Raststifte in Rastlöchern des Adapters gehalten ist. Ferner kann sie über ein Gelenk mit den Seitenwinkeln des Verbindungselements oder mit dem Adapter schwenkbar verbunden sein. In diesem Falle rastet die Abdeckkappe in geschlossenen Zustand in Rastelemente am Verbindungselement ein.

Zusätzlich zu der Designerfunktion kann die Abdeckkappe hydrodynamische Funktionen und Sicherungsaufgaben übernehmen. Im ersten Fall übergreift sie zumindest teilweise die Deckwand des Verbindungselements, wobei der übergreifende Teil der Abdeckkappe als Spoilerelement ausgebildet ist oder ein separates Spoilerelement trägt. Dadurch wird die Spoilerfunktion des Wischblattspoilers unterstützt und der Fahrtwind im Bereich der erfindungsgemäßen Vorrichtung von der Fahrzeugscheibe weg gelenkt. Dadurch wird bei der Abwärtsbewegung des Scheibenwischers ein Zurückziehen von Wasser auf die bereits gereinigte Fahrzeugscheibe vermieden oder zumindest verringert. Ist die Abdeckkappe mit ihrer Seitenwand am Adapter befestigt, den sie gleichzeitig als Sicherungsbügel, der den Adapter und das Verbindungselement zusammenhält.

An der Längsseite des Adapters ist mindestens ein Rastelement vorgesehen, vorzugsweise zwei Rastelemente. Diese werden durch die Abdeckkappe nach außen überdeckt. Um sie dennoch bei geschlossener Abdeckkappe zu Demontagezwecken betätigen zu können, ist an der Abdeckkappe eine Taste vorgesehen, die auf die Rastelemente wirkt und sie bei einer Betätigung löst.

Die Taste kann auch an einer Stirnseite des Adapters angeordnet werden und in eine Tastenöffnung in der Stirnwand des Verbindungselements einrasten. Sie übernimmt dabei gleichzeitig die Funktion eines Rastelements. An der gegenüberliegenden Stirnwand des Verbindungselements ist ein Haltewinkel angebracht, der den Adapter mit seinem abgewickelten Ende hintergreift und in Richtung auf das Wischblatt sichert.

Das Anschlusselement, auf dem der Adapter schwenkbar gelagert ist, weist zweckmäßigerweise an seinen Längsseiten jeweils eine von einem Bodenteil ausgehende Seitenwange auf, die zum Adapter gerichtet ist. Die Seitenwangen sind durch eine Lagerbuchse miteinander verbunden, in der ein Lagerstift drehbar gelagert ist. Diese Anordnung ergibt eine breite Abstützbasis und damit eine gute seitliche Führung des Wischblatts. Zweckmäßigerweise ist der Lagerstift an seinen Enden drehfest mit dem Adapter verbunden, z.B. durch einen Presssitz oder in vorteilhafter Weise durch einen Formschluss, indem an seinen Enden Formschlusselemente vorgesehen sind. Dies kann z.B. eine Kerbverzahnung oder ein polygonales Querschnittprofil sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Darstellung einer montierten, erfindungsgemäßen Vorrichtung,
Fig. 2 eine erfindungsgemäße Vorrichtung in
Explosionsdarstellung,
Fig. 3 eine perspektivische Darstellung einer Abdeckkappe nach

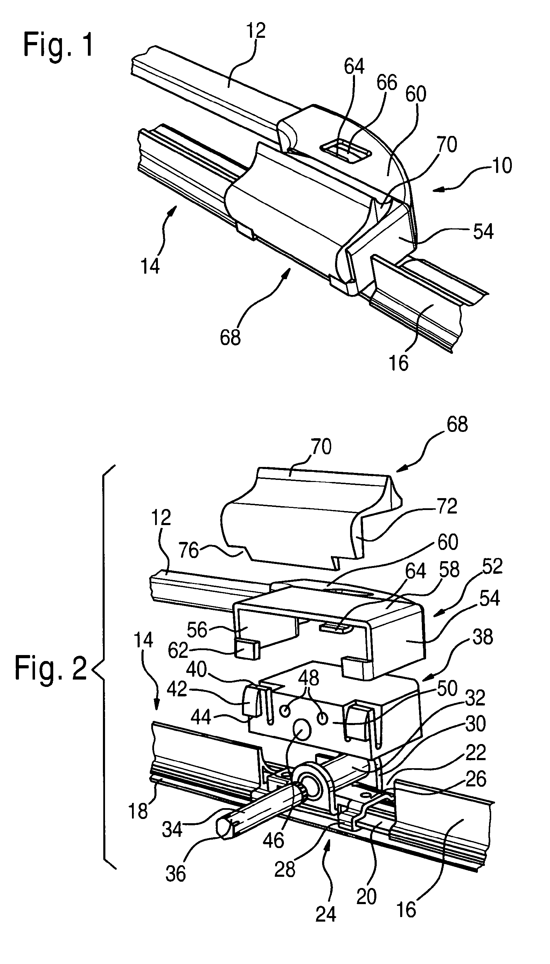

Fig. 2 aus einer anderen Richtung,

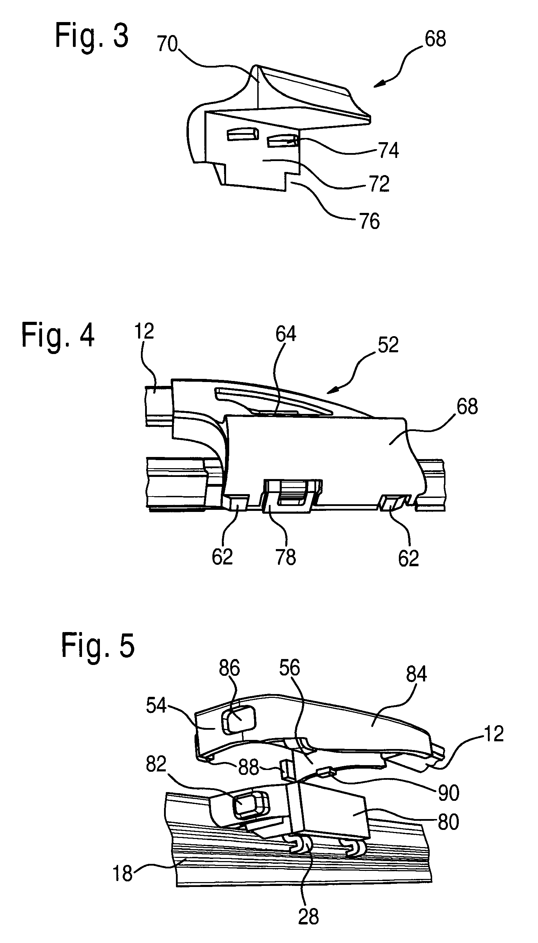

Fig. 4 eine Variante zu Fig. 1,
Fig. 5 eine Variante zu Fig. 4 in Explosionsdarstellung und

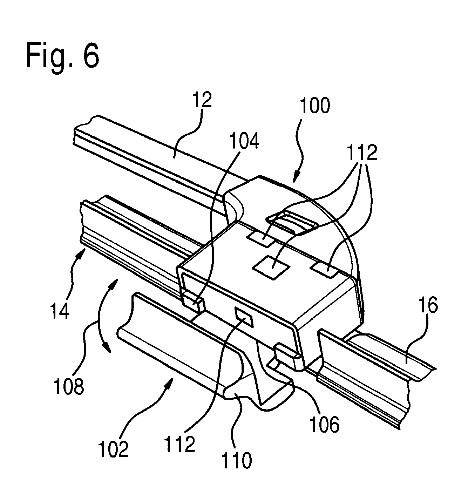

Fig. 6 eine Variante zu Fig. 1 mit abklappbarer Abdeckkappe.

### Beschreibung der Ausführungsbeispiele

Ein Wischblatt 14 ist durch eine Vorrichtung 10 gelenkig mit einem Wischarm 12 verbunden. Das Wischblatt 14 umfasst eine Wischleiste 18 und ein Tragelement 20 in Form zweier parallel laufender Federschienen, an denen ein Spoiler 16 befestigt ist. In einem Fenster 22 des Spoilers 16 ist ein Anschlusselement 24 mit dem Tragelement 20 fest verbunden. Dies kann durch Schweißen und/oder Krallen 28 geschehen.

Das Anschlusselement 24 besitzt eine Bodenplatte, an der die Krallen 28 angeformt sind, und von der aus Seitenwangen 30 ausgehen, die vom Tragelement 20 weg um etwa 90° abgewinkelt zur Bodenplatte 26 verlaufen. Die Seitenwangen 30 tragen eine Lagerbuchse 32. In dieser ist ein Lagerstift 34 schwenkbar gelagert. Die Enden des Lagerstifts 34 stehen seitlich aus der Lagerbuchse 32 vor und besitzen Formschlusselemente 36, mit denen der Lagerstift 34 drehfest in Öffnungen 46 des Adapters 38 eingesetzt wird.

Der Adapter 38 besitzt eine quaderförmige Außenkontur. An einer Längsseite sind zwei Rastelemente 40 in Form von Federzungen vorgesehen, die Rastnasen 42 besitzen. Er wird von der Seite des Wischblatts 14 in ein Verbindungselement 52 eingesetzt, das ein im Wesentlichen quaderförmiger Hohlkörper ist und passgenau mit seiner Innenkontur an der Außenkontur des Adapters 38 anliegt. Das Verbindungselement 52 ist an seiner Deckwand 58 und seinen Stirnwänden 54 und 56 geschlossen. An einer Längsseite des Verbindungselements 52 ist ein Befestigungselement 60 angeformt, das die Längsseite abdeckt und an einem Ende mit dem Wischarm 12 fest verbunden ist. An dieser Längsseite ist an der Deckwand 58 ein Haltewinkel 64 vorgesehen, der nach außen nachgiebig ausgebildet ist und den Adapter 38 in Richtung zum Wischblatt 14 sichert. Dazu greift der Haltewinkel 64 in eine entsprechende Aussparung des Adapters 38 ein oder umgreift die untere Kante des Adapters 38. Die Längsseite, die dem Befestigungselement 60 gegenüberliegt, kann geschlossen sein. In dem dargestellten Ausführungsbeispiel ist sie offen. An dieser Längsseite besitzt das Verbindungselement 58 zwei Seitenwinkel 62, die von den Stirnwänden 54, 56 ausgehen, und an denen bei der Montage die Rastnasen 42 der Rastelemente 40 verrasten und mit ihren Anschlagflächen 44 anliegen. Bei der Demontage können die Rastnasen 42 nach innen zurückgedrückt werden und der Adapter 38 aus dem Verbindungselement 52 entnommen werden. Gegebenenfalls kann der Haltewinkel 64 durch eine Öffnung 66 im Befestigungselement 60 nach außen zurückgedrückt werden.

Das Befestigungselement 60 schließt mit der Deckwand 58 bündig ab, sodass sich an dem Übergang kein Wasser ansammeln kann. Ferner ist das Befestigungselement 60 zur vorderen Stirnwand 54 hin abgerundet, wodurch die Anströmung eine Strömungskomponente in Richtung des Spoilers 16 erhält, sodass ein Zurückziehen des Wassers auf die gereinigte Fahrzeugscheibe vermieden wird.

Auf der Deckwand 58 des Verbindungselements 52 kann zudem ein Spoilerelement 70 vorgesehen werden, das als separates Bauteil mit der Deckwand 58 fest verbunden werden kann oder integraler Bestandteil des Verbindungselements 52 ist. Durch das Spoilerelement 70 wird einerseits die Spoilerwirkung des Spoilers 16 unterstützt und zum anderen die Strömung von der Fahrzeugscheibe abgelenkt, sodass ein Zurückziehen von Wasser auf die Fahrzeugscheibe verringert wird.

Das Spoilerelement 70 kann auch Bestandteil einer Abdeckkappe 68 sein, die mit dem Adapter 38 oder dem Verbindungselement 52 verbunden ist. Hierzu sind bei der Ausführung nach Fig. 1 bis Fig. 3 an einer Seitenwand 72 der Abdeckkappe 68 zwei Raststifte 74 angeordnet, die in zwei Rastlöcher 48 des Adapters 38 eingesetzt werden. Dies geschieht, nachdem der Adapter 38 in das Verbindungselement 52 eingesetzt ist, sodass die Seitenwand 72 der Abdeckkappe 68 die Rastelemente 40 des Adapters 38 abdeckt und das Spoilerelement 70 die Deckwand 58 des Verbindungselements 52 zumindest teilweise überdeckt. Die Abdeckkappe 68 übernimmt dadurch zusätzlich zu ihrer Designerfunktion und Strömungsfunktion eine Sicherungsfunktion des Adapters 38 gegenüber dem Verbindungselement 52. Die Raststifte 74 können durch die offene Längsseite des Verbindungselements 52 in die Rastlöcher 48 geschoben werden. Bei einer geschlossenen Längsseite sind für die Raststifte 74 entsprechende Öffnungen in der Seitenwand des Verbindungsstücks 52 vorzusehen. In den Bereichen der Seitenwinkel 62 des Verbindungselements 52 besitzt die Abdeckkappe 68 entsprechende Aussparungen 76. Um die Abdeckkappe 68 mit dem Verbindungselement 52 zu verbinden, ist es vorteilhaft, sie auf die Seitenwinkel 62 aufzuklippsen.

Zum betätigenden der Rastelemente 40 an einer Seitenwand 50 des Adapters 38 kann die Abdeckkappe 68 eine Taste 78 besitzen, die von außen zu bedienen ist und auf die Rastelemente 40 wirkt (Fig. 4). Wenn die Abdeckkappe 68 mit dem Verbindungselement 52 verbunden ist, kann die Taste 78 am Adapter 38 angeordnet sein und die Funktionen von Rastelementen übernehmen, indem sie in eine entsprechende Öffnung der zugeordneten Seitenwand des Verbindungselements 52 und/oder der Abdeckkappe 68 eingreift.

Die Rastelemente 40 an der Längsseite des Adapters 38 können durch eine Taste 82 an einer Stirnseite des Adapters 38 ersetzt oder ergänzt werden (Fig. 5). Diese greift in eine entsprechende Tastenöffnung 86 in der zugeordneten Stirnwand 54 eines Verbindungselements 84 ein, während an der gegenüberliegenden Stirnwand 56 ein Haltewinkel 90 vorgesehen ist, der den Adapter 80 untergreift oder in eine entsprechende Aussparung des Adapters 80 eingreift. Das Verbindungselement 84 besitzt dann zur offenen Längsseite hin Seitenwinkel 88, die den Adapter 80 an dieser Längsseite führen.

Fig. 6 zeigt eine Ausführung, bei der eine Abdeckkappe 102 mit einem Spoilerelement 110 um ein Gelenk 106 in Richtung eines Pfeils 108 schwenkbar am Adapter 38, 80 oder am Verbindungselement 100 gelagert ist, z.B. an den Seitenwinkeln 104. Das Verbindungselement 100 besitzt an seiner Deckwand bzw. an seiner Längswand Rastmittel 112, mit denen die Abdeckkappe 102 im geschlossenen Zustand verrastet.

## Patentansprüche

1. Vorrichtung (10) zum gelenkigen Verbinden eines Wischblatts (14) mit einem Wischarm (12) eines Scheibenwischers, die ein mit dem Wischarm (12) fest verbundenes Verbindungselement (52, 84, 100) und ein mit einem Tragelement (20) des Wischblatts (14) fest verbundenes Anschlusselement (24) umfasst, das ein Lagerelement (32) trägt, das mit einem Lagerelement (34) an einem Adapter (38, 80) aus Kunststoff ein Schwenklager bildet, wobei der Adapter (38, 80) in dem zum Anschlusselement (24) hin offenen Profil des Verbindungselements (52, 84, 100) durch Rastelemente (40, 78, 82) und Halteelemente (62, 64, 86, 90, 104) fixiert ist, **dadurch gekennzeichnet, dass** das Verbindungselement (52, 84, 100) ein im Wesentlichen quaderförmiger Hohlkörper ist, der auf der dem Anschlusselement (24) zugewandten Seite offen ist und an dem an einer Längsseite ein Befestigungselement (60) angeformt ist, das die Längsseite abdeckt und am Ende des Wischarms (12) befestigt ist, und dass mindestens die Stirnwände (54, 56) und eine Deckwand (58) des Verbindungselements (52, 84, 100) im Wesentlichen geschlossen sind.

2. Vorrichtung (10) nach Anspruch 1, **dadurch gekennzeichnet, dass** der Adapter (38, 80) eine quaderförmige Außenkontur besitzt und das Anschlusselement (24) außen umgibt, wobei der Adapter (38, 80) von der Seite des Wischblatts (14) in das Verbindungselement (52, 84, 100) einsetzbar ist und an einer Längsseite mindestens ein Rastelement (40) mit einer Rastnase (42) aufweist, das an einem Halteelemente (62) an einer zugeordneten, offenen Längsseite des Verbindungselements (52, 84, 100) verrastet, während auf der gegenüberliegenden Längsseite ein Haltewinkel (64) den Adapter (38, 80) in Richtung zum Wischblatt (14) sichert.

3. Vorrichtung (10) nach Anspruch 2, **dadurch gekennzeichnet, dass** zwei Rastelemente (40) mit zwei Halteelementen in Form zweier Seitenwinkel (62) zusammenwirken, die an den Stirnwänden (54, 56) des Verbindungselements (52) angeordnet sind.

4. Vorrichtung (10) nach einem der vorhergehenden Ansprüche, **dadurch gekennzeichnet, dass** das Anschlusselement (24) ausgehend von einem Bodenteil (26) an seinen Längsseiten jeweils eine Seitenwange (30) aufweist, die zum Adapter (38, 80) gerichtet und durch eine Lagerbuchse (32) miteinander verbunden sind, in der ein Lagerstift (34) drehbar gelagert ist.

5. Vorrichtung (10) nach Anspruch 4, **dadurch gekennzeichnet, dass** der Lagerstift (34) an seinen Enden drehfest mit Seitenwänden (50) des Adapters (38, 80) verbunden ist.

6. Vorrichtung (10) nach Anspruch 5, **dadurch gekennzeichnet, dass** der Lagerstift (34) an seinen Enden Formschlusselemente (36) aufweist, die in Öffnungen (46) der Seitenwände (50) des Adapters (38) eingreifen und/oder eingepresst sind.

7. Vorrichtung (10) nach einem der vorhergehenden Ansprüche, **dadurch gekennzeichnet, dass** an einer Deckwand (58) des Verbindungselements (52, 84, 100) ein Spoilerelement (70, 110) vorgesehen ist, das sich in Längsrichtung des Wischblatts (14) erstreckt.

8. Vorrichtung (10) nach einem der vorhergehenden Ansprüche, **dadurch gekennzeichnet, dass** sie eine Abdeckkappe (68, 102) besitzt, die mit dem Adapter (38, 80) oder mit dem Verbindungselement (52, 84, 100) über eine Seitenwand (72) verbunden ist, eine zugeordnete Längsseite des Verbindungselements (52, 84, 100) abdeckt und mindestens teilweise über die Deckwand (58) des Verbindungselements (52, 84, 100) reicht.

9. Vorrichtung (10) nach Anspruch 8, **dadurch gekennzeichnet, dass** die Abdeckkappe (68) an ihrer Seitenwand (72) nach innen gerichtete Raststifte (74) aufweist, die in Rastlöcher (48) des Adapters (38) eingreifen.

10. Vorrichtung (10) nach Anspruch 8, **dadurch gekennzeichnet, dass** die Abdeckkappe (68) an den Seitenwinkeln (62) des Verbindungselements (52) angeklippst ist.

11. Vorrichtung (10) nach Anspruch 8, **dadurch gekennzeichnet, dass** die Abdeckkappe (102) schwenkbar über ein Gelenk (106) mit den Seitenwinkeln (104) des Verbindungselements (100) verbunden ist und über Rastmittel (112) an der Deckwand (58) mit dem Verbindungselement (100) verrastet.

12. Vorrichtung (10) nach Anspruch 8, **dadurch gekennzeichnet, dass** die Seitenwand (72) der Abdeckkappe (68) über ein Gelenk (106) an einer Längsseite des Adapters (38, 80) mit diesem verbunden ist und über Rastmittel (112) an der Deckwand (58) mit dem Verbindungselement (100) verrastet.

13. Vorrichtung (10) nach einem der Ansprüche 8 bis 12, **dadurch gekennzeichnet, dass** die Abdeckkappe (68) an einer Längsseite eine Taste (78) aufweist, durch die die Rastelemente (40) gelöst werden können.

14. Vorrichtung (10) nach einem der Ansprüche 8 bis 13, **dadurch gekennzeichnet, dass** an der Abdeckkappe (68, 102) das Spoilerelement (70, 110) angeformt ist.

15. Vorrichtung (10) nach einem der vorhergehenden Ansprüche, **dadurch gekennzeichnet, dass** der Adapter (80) an einer Stirnseite eine Taste (82) aufweist, die in eine Tastenöffnung (86) in einer Stirnwand (54, 56) des Verbindungselements (84) einrastet, während er an der entgegengesetzten Stirnseite (54, 56) durch einen Haltewinkel (90) des Verbindungselements (84) gehalten ist.

16. Wischarm (12) mit einem Verbindungselement (52, 84, 100), das ein im Wesentlichen quaderförmiger Hohlkörper ist, der auf der dem Anschlusselement (24) zugewandten Seite offen ist und an dem an einer Längsseite ein Befestigungselement (60) angeformt ist, das die Längsseite abdeckt und am Ende eines Wischarms (12) befestigt ist, und dass mindestens die Stirnwände (54, 56) und eine Deckwand (58) des Verbindungselements (52, 84, 100) im Wesentlichen geschlossen sind, zum Verwenden in einer Vorrichtung nach einem der Ansprüche 1 bis 12.

## Claims

1. Device (10) for the pivoting connection of a wiper blade (14) to a wiper arm (12) of a windscreen wiper, which device (10) comprises a connecting element (52, 84, 100) fixedly connected to the wiper arm (12) and comprises an attachment element (24) fixedly connected to a supporting element (20) of the wiper blade (14), which attachment element (24) bears a bearing element (32) which, together with a bearing element (34) on an adapter (38, 80) composed of plastic, forms a pivot bearing, with the adapter (38, 80) being fixed in the profile, which is open in the direction of the attachment element (24), of the connecting element (52, 84, 100) by means of latching elements (40, 78, 82) and holding elements (62, 64, 86, 90, 104), **characterized in that** the connecting element (52, 84, 100) is a substantially cuboidal hollow body which is open on the side facing towards the attachment element (24) and on one longitudinal side of which is integrally formed a fastening element (60) which covers the longitudinal side and is fastened to the end of the wiper arm (12), and **in that** at least the end walls (54, 56) and a top wall (58) of the connecting element (52, 84, 100) are substantially closed.

2. Device (10) according to Claim 1, **characterized in that** the adapter (38, 80) has a cuboidal outer contour and surrounds the attachment element (24) at the outside, with it being possible for the adapter (38, 80) to be inserted into the connecting element (52, 84, 100) from the side of the wiper blade (14) and with the adapter (38, 80) having, on one longitudinal side, at least one latching element (40) with a latching lug (42) which latches on a holding element (62) on an associated open longitudinal side of the connecting element (52, 84, 100), while on the opposite longitudinal side, a holding angle bracket (64) secures the adapter (38, 80) in the direction of the wiper blade (14).

3. Device (10) according to Claim 2, **characterized in that** two latching elements (40) interact with two holding elements in the form of two side angle brackets (62) which are arranged on the end walls (54, 56) of the connecting element (52).

4. Device (10) according to one of the preceding claims, **characterized in that** the attachment element (24) has, at its longitudinal sides, in each case one side cheek (30) proceeding from a base part (26), which side cheeks (30) are directed towards the adapter (38, 80) and are connected to one another by means of a bearing bush (32) in which a bearing pin (34) is rotatably mounted.

5. Device (10) according to Claim 4, **characterized in that** the bearing pin (34) is rotationally fixedly connected, at its ends, to side walls (50) of the adapter (38, 80).

6. Device (10) according to Claim 5, **characterized in that** the bearing pin (34) has, at its ends, positive-locking elements (36) which engage and/or are pressed into openings (46) of the side walls (50) of the adapter (38).

7. Device (10) according to one of the preceding claims, **characterized in that** a spoiler element (70, 110) is provided on a top wall (58) of the connecting element (52, 84, 100), which spoiler element extends in the longitudinal direction of the wiper blade (14).

8. Device (10) according to one of the preceding claims, **characterized in that** said device has a covering cap (68, 102) which is connected to the adapter (38, 80) or to the connecting element (52, 84, 100) by means of a side wall (72) and which covers an associated longitudinal side of the connecting element (52, 84, 100) and which extends at least partially over the top wall (58) of the connecting element (52, 84, 100).

9. Device (10) according to Claim 8, **characterized in that** the covering cap (68) has, on its side wall (72), inwardly directed latching pins (74) which engage in latching holes (48) of the adapter (38).

10. Device (10) according to Claim 8, **characterized in that** the covering cap (68) is clipped to the side angle brackets (62) of the connecting element (52).

11. Device (10) according to Claim 8, **characterized in that** the covering cap (102) is pivotably connected to the side angle brackets (104) of the connecting element (100) by means of a joint (106) and latches with the connecting element (100) by way of latching means (112) on the top wall (58).

12. Device (10) according to Claim 8, **characterized in that** the side wall (72) of the covering cap (68) is connected to the adapter (38, 80) by means of a joint (106) on a longitudinal side of said adapter (38, 80) and latches with the connecting element (100) by way of latching means (112) on the top wall (58).

13. Device (10) according to one of Claims 8 to 12, **characterized in that** the covering cap (68) has, on a longitudinal side, a button (78) by means of which the latching elements (40) can be released.

14. Device (10) according to one of Claims 8 to 13, **characterized in that** the spoiler element (70, 110) is integrally formed on the covering cap (68, 102).

15. Device (10) according to one of the preceding claims, **characterized in that** the adapter (80) has, on one end side, a button (82) which latches into a button opening (86) in an end wall (54, 56) of the connecting element (84), while said adapter (80) is held on the opposite end side (54, 56) by means of a holding angle bracket (90) of the connecting element (84).

16. Wiper arm (12) having a connecting element (52, 84, 100) which is a substantially cuboidal hollow body which is open on the side facing towards the attachment element (24) and on one longitudinal side of which is integrally formed a fastening element (60) which covers the longitudinal side and is fastened to the end of a wiper arm (12), and in that at least the end walls (54, 56) and a top wall (58) of the connecting element (52, 84, 100) are substantially closed, for use in a device according to one of Claims 1 to 12.

## Revendications

1. Dispositif (10) pour la connexion articulée d'un balai d'essuie-glace (14) à un bras d'essuie-glace (12) d'un essuie-glace, qui comprend un élément de connexion (52, 84, 100) connecté fixement au bras d'essuie-glace (12) et un élément de raccordement (24) connecté fixement à un élément porteur (20) du balai d'essuie-glace (14), qui porte un élément de palier (32) qui forme un palier pivotant avec un élément de palier (34) sur un adaptateur (38, 80) en plastique, l'adaptateur (38, 80) étant fixé dans le profilé de l'élément de connexion (52, 84, 100) ouvert vers l'élément de raccordement (24) par des éléments d'encliquetage (40, 78, 82) et des éléments de retenue (62, 64, 86, 90, 104), **caractérisé en ce que** l'élément de connexion (52, 84, 100) est un corps creux de forme essentiellement parallélépipédique, qui est ouvert du côté tourné vers l'élément de raccordement (24) et sur lequel est façonné, sur un côté longitudinal, un élément de fixation (60) qui recouvre le côté longitudinal et qui est fixé à l'extrémité du bras d'essuie-glace (12), et **en ce qu'**au moins les parois frontales (54, 56) et une paroi de recouvrement (58) de l'élément de connexion (52, 84, 100) sont essentiellement fermées.

2. Dispositif (10) selon la revendication 1, **caractérisé en ce que** l'adaptateur (38, 80) possède un contour extérieur parallélépipédique et entoure à l'extérieur l'élément de raccordement (24), l'adaptateur (38, 80) pouvant être inséré depuis le côté du balai d'essuie-glace (14) dans l'élément de connexion (52, 84, 100) et présentant, sur un côté longitudinal, au moins un élément d'encliquetage (40) avec un nez d'encliquetage (42), qui s'encliquète sur un élément de retenue (62) sur un côté longitudinal ouvert associé de l'élément de connexion (52, 84, 100), tandis que sur le côté longitudinal opposé, un coin de retenue (64) fixe l'adaptateur (38, 80) dans la direction du balai d'essuie-glace (14).

3. Dispositif (10) selon la revendication 2, **caractérisé en ce que** deux éléments d'encliquetage (40) coopèrent avec deux éléments de retenue en forme de deux coins latéraux (62), qui sont disposés sur les parois frontales (54, 56) de l'élément de connexion (52).

4. Dispositif (10) selon l'une quelconque des revendications précédentes, **caractérisé en ce que** l'élément de raccordement (24) présente à chaque fois une joue latérale (30) partant d'une partie de fond (26) sur ses côtés longitudinaux, lesquelles sont orientées vers l'adaptateur (38, 80) et sont connectées l'une à l'autre par une douille de palier (32), dans laquelle est montée à rotation une goupille de palier (34).

5. Dispositif (10) selon la revendication 4, **caractérisé en ce que** la goupille de palier (34) est connectée à ses extrémités de manière solidaire en rotation à des parois latérales (50) de l'adaptateur (38, 80).

6. Dispositif (10) selon la revendication 5, **caractérisé en ce que** la goupille de palier (34) présente, à ses extrémités, des éléments d'engagement positif (36), qui viennent en prise et/ou sont pressés dans des ouvertures (46) des parois latérales (50) de l'adaptateur (38).

7. Dispositif (10) selon l'une quelconque des revendications précédentes, **caractérisé en ce qu'**un élément de déflecteur (70, 110) est prévu sur une paroi de recouvrement (58) de l'élément de connexion (52, 84, 100), qui s'étend dans la direction longitudinale du balai d'essuie-glace (14).

8. Dispositif (10) selon l'une quelconque des revendications précédentes, **caractérisé en ce qu'**il possède un capot de recouvrement (68, 102) qui est connecté à l'adaptateur (38, 80) ou à l'élément de connexion (52, 84, 100) par le biais d'une paroi latérale (72), recouvre un côté longitudinal associé de l'élément de connexion (52, 84, 100) et s'étend au moins en partie au-dessus de la paroi de recouvrement (58) de l'élément de connexion (52, 84, 100).

9. Dispositif (10) selon la revendication 8, **caractérisé en ce que** le capot de recouvrement (68) présente, sur sa paroi latérale (72), des broches d'encliquetage (74) orientées vers l'intérieur, qui viennent en prise dans des trous d'encliquetage (48) de l'adaptateur (38).

10. Dispositif (10) selon la revendication 8, **caractérisé en ce que** le capot de recouvrement (68) est enclipsé sur les coins latéraux (62) de l'élément de connexion (52).

11. Dispositif (10) selon la revendication 8, **caractérisé en ce que** le capot de recouvrement (102) est connecté de manière pivotante par le biais d'une articulation (106) aux coins latéraux (104) de l'élément de connexion (100) et s'encliquète par le biais de moyens d'encliquetage (112) à la paroi de recouvrement (58) avec l'élément de connexion (100).

12. Dispositif (10) selon la revendication 8, **caractérisé en ce que** la paroi latérale (72) du capot de recouvrement (68) est connectée par le biais d'une articulation (106) à un côté longitudinal de l'adaptateur (38, 80) à celui-ci, et s'encliquète par le biais de moyens d'encliquetage (112) sur la paroi de recouvrement (58) avec l'élément de connexion (100).

13. Dispositif (10) selon l'une quelconque des revendications 8 à 12, **caractérisé en ce que** le capot de recouvrement (68) présente sur un côté longitudinal un bouton (78) par le biais duquel les éléments d'encliquetage (40) peuvent être libérés.

14. Dispositif (10) selon l'une quelconque des revendications 8 à 13, **caractérisé en ce que** l'élément de déflecteur (70, 110) est façonné sur le capot de recouvrement (68, 102).

15. Dispositif (10) selon l'une quelconque des revendications précédentes, **caractérisé en ce que** l'adaptateur (80) présente, sur un côté frontal, un bouton (82) qui s'encliquète dans une ouverture de bouton (86) dans une paroi frontale (54, 56) de l'élément de connexion (84), tandis qu'il est maintenu sur le côté frontal opposé (54, 56) par un coin de retenue (90) de l'élément de connexion (84).

16. Bras d'essuie-glace (12) avec un élément de connexion (52, 84, 100) qui est un corps creux de forme essentiellement parallélépipédique, qui est ouvert du côté tourné vers l'élément de raccordement (24) et sur lequel est façonné, sur un côté longitudinal, un élément de fixation (60), qui recouvre le côté longitudinal, et qui est fixé à l'extrémité d'un bras d'essuie-glace (12), et en ce qu'au moins les parois frontales (54, 56) et une paroi de recouvrement (58) de l'élément de connexion (52, 84, 100) sont essentiellement fermées, pour l'utilisation dans un dispositif selon l'une quelconque des revendications 1 à 12.
